# FASCICULE DE BREVET EUROPEEN

(11) **EP 2 492 550 B1**
(45) Date de publication et mention de la délivrance du brevet: **24.07.2013**
(21) Numéro de dépôt: 12305209.4
(22) Date de dépôt: 22.02.2012
(51) Int. Cl.: F16B 33/06, B05C 5/02, B05C 17/005, B64F 5/00

(54) **Dispositif d'enduction d'un objet saillant par un produit fluide, ensemble de distribution et de procédé associés**
Beschichtungsvorrichtung zum Beschichten eines herausragenden Werkstückes, entsprechende Ausgabevorrichtung und entsprechendes Beschichtungsverfahren
Device for coating a protruding object with a fluid product, associated dispensing unit and method

(30) Priorité: 22.02.2011 FR 1100527
(43) Date de publication de la demande: 29.08.2012
(73) Titulaire: Dassault Aviation, 75008 Paris (FR)
(72) Inventeur: Hardouin, Cyril, 33460 Arsac (FR); Guilbert, Cédric, 33600 Pessac (FR)
(74) Mandataire: Blot, Philippe Robert Emile

(56) Documents cités:
- EP-A1- 0 181 483
- DE-U1-202004 018 903
- FR-A1- 2 626 629
- FR-A5- 2 192 467
- US-A1- 2008 134 971
- US-A1- 2011 024 943

## Description

La présente invention concerne un dispositif d'enduction d'un objet saillant par un produit fluide, selon le préambule de la revendication 1.

Un tel dispositif est destiné notamment à enduire un objet monté saillant par rapport à une pièce mécanique, en particulier un élément de fixation.

Cet élément de fixation est par exemple un assemblage vis/écrou, un assemblage boulon/écrou, un rivet ou tout autre assemblage de ce type.

Le dispositif est particulièrement adapté à une pièce structurelle d'aéronef, telle qu'un élément de fuselage ou élément de voilure. En particulier, la pièce est un panneau de voilure, comme un panneau d'aile destiné à délimiter un réservoir de combustible pour la propulsion de l'aéronef, ou encore un panneau de fuselage.

Le produit fluide destiné à enduire l'objet saillant est notamment un mastic se présentant sous forme d'une pâte fluide. Ce mastic est destiné en particulier à boucher des trous et des fentes, à faire adhérer des objets de même nature ou de natures différentes, à rendre étanche un assemblage, ou encore à protéger des pièces contre des agressions extérieures.

En variante, le produit fluide est une peinture ou encore un produit de nettoyage.

Dans le domaine aéronautique, il est crucial d'enduire les fixations mécaniques de pièces, afin d'assurer notamment une étanchéité, notamment au niveau des réservoirs ou du fuselage et de la voilure, ou de participer à la protection anti-corrosion et/ou anti-foudre de l'aéronef.

A cet effet, il est connu d'enduire l'objet saillant de mastic à l'aide d'un pinceau préalablement trempé dans le mastic, puis à recouvrir manuellement un organe de fixation par une ou plusieures couches de mastic.

Pour garantir de bonnes propriétés, le recouvrement de l'élément de fixation doit être homogène, lisse, et présenter une épaisseur régulière et suffisante. II ne doit pas présenter d'arête vive, ni de zone non recouverte. Par ailleurs, il est nécessaire d'éviter qu'un fil de produit raccorde un élément de fixation à un autre.

De telles opérations sont donc réalisées manuellement. Elles nécessitent un tour de main particulier et une concentration importante, ce qui est consommateur en temps et onéreux.

En outre, pour assurer de bonnes propriétés techniques, pour contrôler les coûts et limiter l'impact sur l'environnement, la quantité de produit déposée doit être parfaitement maîtrisée. Une telle maîtrise est cependant difficile à obtenir manuellement de manière reproductible.

Par aillleurs, les éléments de fixation sont parfois situés dans des endroits peu accessibles pour l'opérateur, par exemple dans des voilures d'aéronef.

Pour mettre en oeuvre ce type d'enduction, le produit à enduire est généralement disposé dans un récipient à l'air libre qui doit être rempli fréquemment et qui doit être situé à proximité de l'élément à enduire. Le déplacement du pinceau vers le récipient engendre donc des pertes de productivité du fait des mouvements non productifs qui sont nécessaires. Le stockage du produit fluide dans un récipient ouvert peut en outre dégrader la qualité du produit à enduire, lorsque celui-ci est sensible à l'air.

FR-2 192 467 décrit un dispositif de pulvérisation d'un produit destiné à former une poudre. US 2008/134971 décrit un dispositif selon le préambule de la revendication 1. FR 2 626 629 décrit un dispositif de fixation d'un élément de structure d'aéronef. EP 0 181 483 décrit un appareil pour appliquer une quantité précise de produit sur un organe de fixation.

Un but de l'invention est donc de disposer d'un dispositif d'enduction d'un produit fluide sur un objet saillant, notamment sur un élément de fixation d'une pièce mécanique, qui conduit à une enduction maîtrisée et reproductible.

En particulier, un but de l'invention est de disposer d'un dispositif simple d'utilisation, qui garantisse qu'une couche homogène de produit à enduire est appliquée sur l'objet saillant, de manière efficace et économique.

A cet effet, l'invention a pour objet un dispositif selon la revendication 1.

Le dispositif selon l'invention peut comprendre l'une ou plusieurs des caractéristiques des revendications 2 à 16.

Le dispositif peut comprendre l'une ou plusieurs des caractéristiques suivantes:
- la cloche est réalisée en un élastomère, notamment une mousse élastomère telle qu'une mousse EPDM ;
- la tête comporte un guide support, la cloche étant montée sur le guide support ;
- la chemise est réalisée en un matériau plus souple que le matériau formant le guide support.

L'invention a également pour objet un ensemble de distribution selon la revendication 17.

L'invention a aussi pour objet un procédé d'enduction selon la revendication 18.

Le procédé selon l'invention peut comprendre l'une ou plusieurs des caractéristiques suivantes :
- la cloche est déformable entre une configuration rétractée, d'étendue radiale minimale et une configuration déformée radialement, la configuration déformée constituant une configuration de repos ;
- le procédé comporte une étape de d'évasement de la cloche vers sa configuration déformée radialement pour que le produit présent dans la cavité d'insertion s'applique sur l'ensemble des surfaces de l'objet saillant, ainsi que sur la zone périphérique adjacente à l'objet saillant.

L'invention sera mieux comprise à la lecture de la description qui va suivre, donnée uniquement à titre d'exemple, et faite en se référant aux dessins annexés, sur lesquels :
- la figure 1 est une vue schématique de côté d'un premier dispositif d'enduction selon l'invention ;
- la figure 2 est une vue de côté de la partie distale du dispositif de la figure 1 comprenant la tête rotative de distribution de produit ;
- la figure 3 est une vue schématique illustrant l'ensemble d'entraînement en rotation de la tête et du conduit de distribution du dispositif de la figure 1 ;
- la figure 4 est une vue de dessus de l'ensemble de distribution amovible du dispositif de la figure 1 ;
- la figure 5 est une vue prise partiellement en coupe suivant un plan médian de la tête de distribution du dispositif de la figure 1, lors d'une première étape d'enduction d'un objet saillant ;
- la figure 6 est une vue analogue à la figure 5, lors d'une deuxième étape d'enduction ;
- la figure 7 est une vue analogue à la figure 5, lors d'une troisième étape d'enduction ;
- la figure 8 est une vue analogue à la figure 5, illustrant l'enduction d'un objet saillant différent ;
- la figure 9 est une vue analogue à la figure 8, illustrant l'enduction d'un autre objet saillant avec une tête de distribution différente ;

Dans tout ce qui suit, le terme « proximal » s'entend généralement comme plus proche d'un opérateur du dispositif et plus éloigné de l'objet à enduire. Le terme « distal » s'entend généralement comme plus éloigné d'un opérateur du dispositif et plus proche de l'objet à enduire. Les termes « amont » et « aval » s'entendent par rapport au sens normal de circulation d'un fluide.

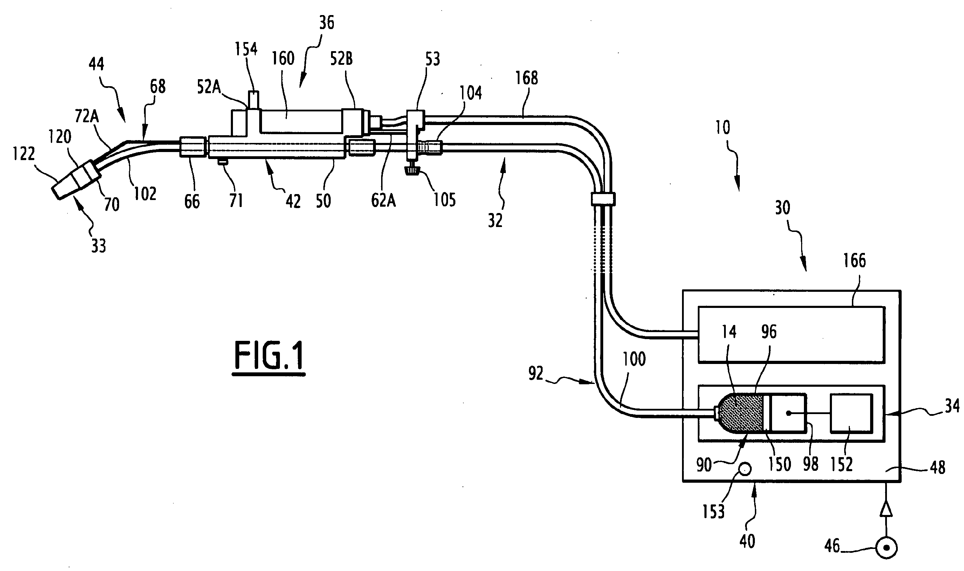

Un premier dispositif d'enduction 10 selon l'invention est représenté sur les figures 1 à 7.

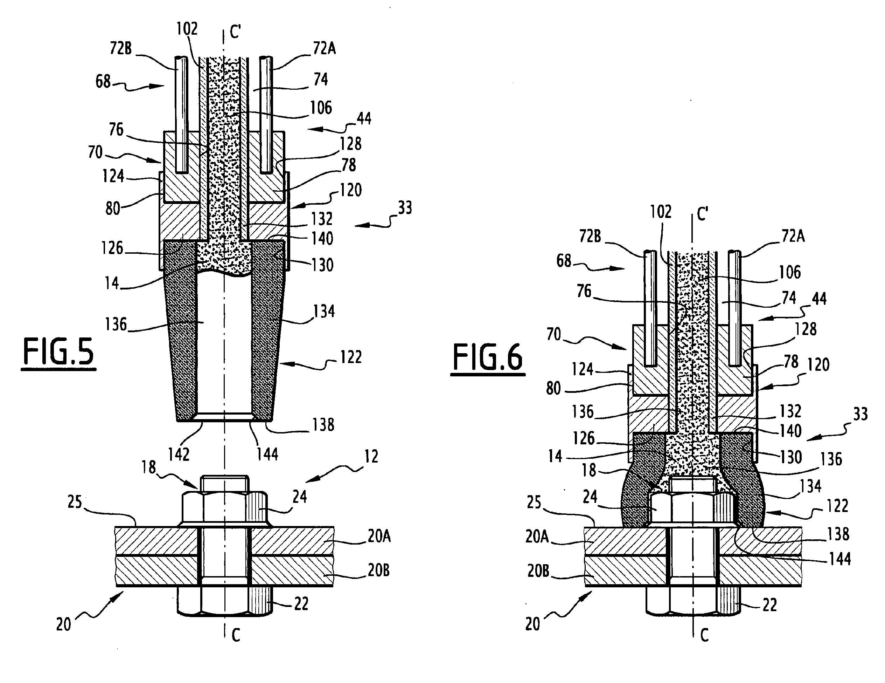

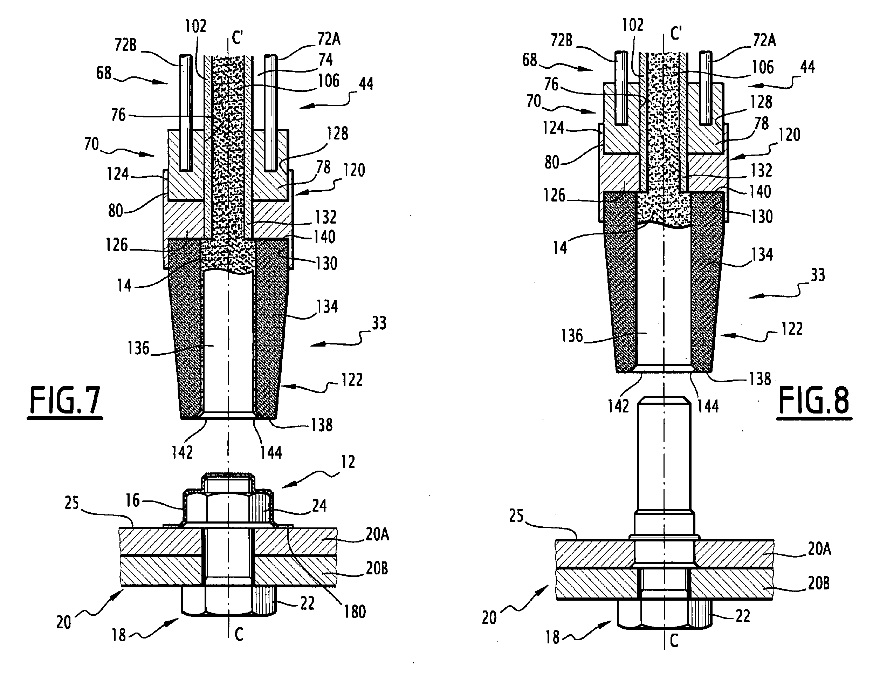

Ce dispositif 10 est destiné à enduire un objet saillant 12, visible sur la figure 5, avec un produit fluide 14, pour former une couche 16 de produit, visible sur la figure 7. La couche 16 recouvre l'objet saillant 12.

Comme illustré par la figure 5, l'objet saillant 12 est par exemple un organe de fixation 18 faisant saillie à partir d'une pièce mécanique 20.

L'organe de fixation 18 est notamment destiné à assembler deux parties 20A, 20B de la pièce 20 entres elles, ou plus généralement à fixer un corps rapporté sur la pièce 20.

Dans l'exemple représenté sur la figure 5, l'organe de fixation 18 comporte un organe 22 traversant la pièce 20 et un organe de maintien 24 de l'organe traversant 22, plaqué sur une surface 25 de la pièce 20.

L'organe traversant 22 est par exemple une vis ou un boulon. L'organe de maintien 24 est par exemple un écrou. Dans l'exemple illustré, seul l'organe de maintien 24 est enduit grâce au dispositif selon l'invention. Alternativement c'est l'organe traversant 22 uniquement qui est enduit ou bien les deux organes 22 et 24.

La pièce 20 est avantageusement un élement structurel d'un véhicule et en particulier un élément structurel d'aéronef. La pièce 20 est destinée en particulier à former une partie du fuselage ou de la voilure de !'aéronef.

Le produit 14 est un produit de revêtement de la pièce 20. Le produit 14 est formé avantageusement d'un mastic sous forme de pâte destiné à boucher les trous et les fentes, à faire adhérer les objets de même nature ou de natures différentes entre eux, à rendre étanche un assemblage, ou à protéger des pièces contre les aggressions extérieures. Ce mastic est présent initialement sous forme fluide. Une fois appliqué sur la pièce 20 et sur l'organe de fixation 18, le mastic se solidifie, par exemple par réticulation ou/et polymérisation.

En variante, le produit fluide 14 est une peinture, ou encore un produit de nettoyage.

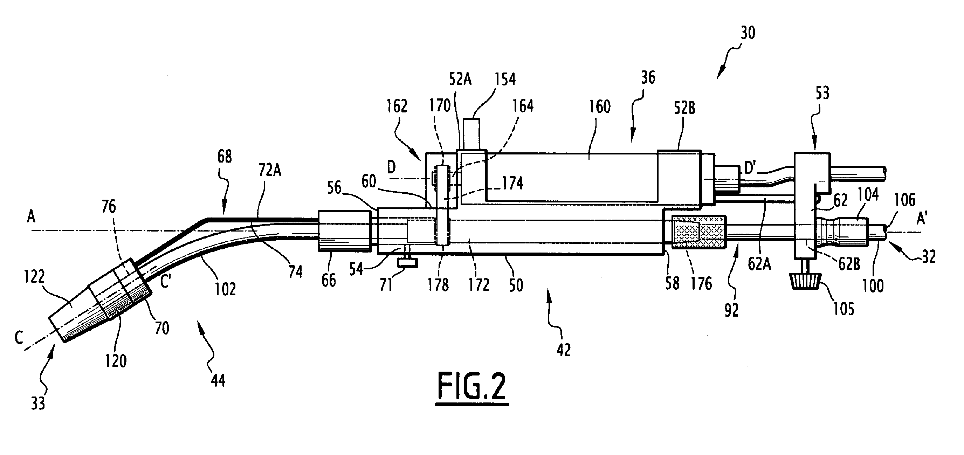

Comme illustré par les figures 1 et 2, le dispositif d'enduction 10 comporte un ensemble 30 de support, un ensemble amovible 32 de distribution de produit sur l'objet saillant 12 présentant une tête 33 d'application de produit, et un ensemble 34 d'injection de produit à travers l'ensemble de distribution 32.

Comme on le verra plus bas et selon l'invention, le dispositif d'enduction 10 comporte en outre un ensemble actif 36 d'entraînement en rotation de la tête 33 de l'ensemble de distribution 32 pour assurer un dépôt homogène de produit fluide sur l'objet saillant 12.

L'ensemble de distribution 32 regroupe l'ensemble des éléments au contact du produit 14 et peut être soit à usage unique, soit utilisé de façon répétée après nettoyage entre chaque utilisation.

Comme illustré par les figures 1 et 2, l'ensemble de support 30 est dans cet exemple destiné à être porté par un utilisateur du dispositif 10.

L'ensemble de support 30 comporte une platine de support 40, une poignée 42 de positionnement de l'ensemble de distribution 32 et un nez 44 de guidage de la tête 33 de l'ensemble de distribution 32, le nez 44 faisant saillie à partir de la poignée 42.

Dans un mode avantageux de réalisation, la platine 40 est destinée à être portée par l'utilisateur du dispositif 10, par exemple en étant disposée sur son dos ou/et sur ses épaules. La platine 40 est reliée à au moins une source 46 de puissance hydraulique ou/et électrique destinée à alimenter l'ensemble d'injection 34 et l'ensemble 36 d'entraînement en rotation. En variante, la platine 40 porte la source 46. La platine 40 comporte une plaque de support 48.

La poignée 42 est visible en détail sur la figure 2. Elle est montée mobile indépendamment de la platine 40 pour permettre une orientation quelconque du nez de guidage 44 et de la tête 33 de l'ensemble de distribution 32 en vue d'assurer une distribution adéquate du produit sur l'objet saillant 12.

La poignée 42 comporte un corps creux 50. Dans cette exemple, elle comporte en outre au moins un organe de fixation 52A, 52B d'un moteur de l'ensemble d'entraînement 36 en rotation qui fait saillie par rapport au corps 50, et avantageusement, un organe déporté de guidage 53 de l'ensemble de distribution 32.

Le corps 50 présente une forme générale allongée suivant un axe longitudinal A-A'. II délimite intérieurement une lumière longitudinale 54 de passage de l'ensemble de distribution 32.

La lumière 54 débouche axialement à l'extrémité proximale 58 et à l'extrémité distale 56 du corps 50.

La lumière 54 débouche en outre transversalement vers l'organe de fixation 52A par une ouverture latérale 60.

La poignée 42 est destinée à être saisie par la main d'un utilisateur pour orienter le nez de guidage 44 et l'ensemble de distribution 32 par rapport à l'objet saillant 12 .

Dans cet exemple, l'organe de guidage 53 est formé par un étrier 62 raccordé au corps de poignée 50 par un organe 62A longitudinal de fixation. L'étrier 62 délimite un passage traversant 62B de réception de l'ensemble de distribution 32.

Comme illustré par la figure 2, le nez de guidage 44 comporte un raccord proximal 66, un châssis ajouré 68 et un raccord distal 70. Le raccord distal 70 est destiné à recevoir la tête 33 de l'ensemble de distribution 32, comme on le verra plus bas.

Le nez de guidage 44 fait saillie longitudinalement à partir du corps creux 50 de la poignée 42.

Le raccord proximal 66 est fixé sur la poignée 42. II est avantageusement monté à l'extrémité distale 56 de cette poignée. Dans cet exemple, il porte des moyens (non représentés) de réglage permettant d'ajuster la longueur des tiges 72A, 72B pour écarter longitudinalement le raccord distal 70 du raccord proximal 66. Le raccord 66 est également mobile en rotation autour de l'axe A-A' afin de permettre d'orienter angulairement le châssis 68 autour de cet axe, le raccord 66 étant maintenu dans la position angulaire désirée grâce à la vis de serrage 71.

Dans cet exemple, le châssis 68 est formé par une structure ajourée. II comporte ainsi au moins une tige de guidage 72A, 72B délimitant un espace intermédiaire 74 de réception de l'ensemble de distribution 32.

Dans l'exemple représenté sur la figure 2, le châssis 68 comporte deux tiges 72A, 72B décalées latéralement l'une par rapport à l'autre. Les tiges 72A, 72B sont par exemple sensiblement parallèles l'une à l'autre. Dans cet exemple, les tiges 72A, 72B sont coudées, de sorte que le raccord distal 70 est décalé transversalement par rapport au raccord proximal 66 par rapport à l'axe longitudinal A-A' de la poignée 42.

Le raccord distal 70 est monté à l'extrémité distale des tiges 72A, 72B. II délimite intérieurement une lumière 76 de passage de l'ensemble de distribution 32.

II présente un tronçon distal 78 (visible sur la figure 5) de guidage de la rotation de la tête 33, comme on le verra plus bas.

Comme illustré par la figure 5, le tronçon de guidage 78 est formé par un manchon cylindrique délimitant intérieurement la lumière 76 et délimitant extérieurement une surface périphérique cylindrique 80.

Comme illustré par les figures 1, 2 et 4, l'ensemble de distribution 32 comprend, d'amont en aval, un réservoir 90 destiné à recevoir le produit fluide 14, un conduit de distribution 92, et la tête de distribution 33 raccordée au réservoir 90 par l'intermédiaire du conduit de distribution 92.

Dans cet exemple, l'ensemble de distribution 32 est monté totalement amovible par rapport à l'ensemble de support 30. II forme ainsi un consommable pouvant être démonté en vue d'être nettoyé et/ou jeté.

Dans une variante, seule une partie de l'ensemble de distribution 32 est montée de manière amovible, comme par exemple le conduit 92 ou la tête 33.

Le réservoir 90 comporte un fût creux 96 destiné à recevoir le produit fluide 14 et un raccord aval 97. Le fût creux 90 débouche longitudinalement en aval dans le conduit 92 et délimite une ouverture amont 98.

Le raccord aval 97 permet la fixation étanche du conduit de distribution 92 sur le réservoir 90.

Le conduit de distribution 92 délimite un passage intérieur 106 continu de circulation de produit fluide débouchant en amont dans le fût 96 à travers le raccord 97, et débouchant en aval dans la tête de distribution 33.

Le conduit de distribution 92 est généralement flexible. Sa flexibilité est ainsi supérieure à celle du châssis 68 du nez de guidage 44 et est supérieure à la flexibilité du corps 50 de la poignée.

La longueur du conduit de distribution 92 est supérieure à la longueur du bras de l'opérateur.

Dans cet exemple, le conduit de distribution 92 comporte, d'amont en aval, un tronçon proximal 100 fixe en rotation par rapport à l'ensemble de support 30, un tronçon distal 102 rotatif par rapport à l'ensemble de support 30, et un raccord tournant 104 interposé entre le tronçon proximal 100 et le tronçon distal 102. Les tronçons 100 et 102 sont avantageusement des tubes flexibles et translucides, par exemple en polyuréthane.

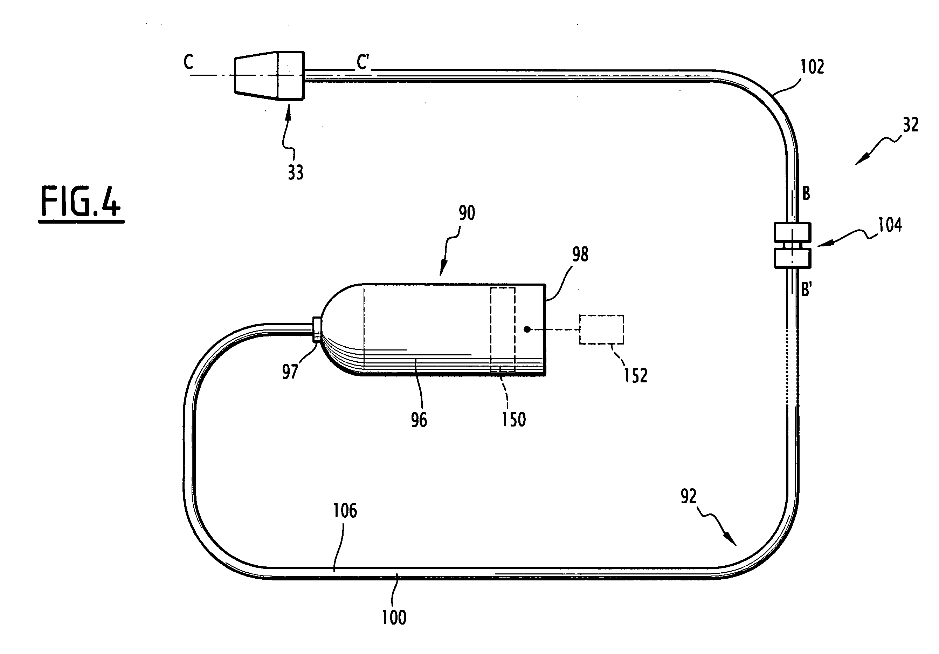

Le raccord 104 raccorde de manière étanche l'extrémité aval du tronçon proximal 100 à l'extrémité amont du tronçon distal 102 en autorisant une rotation du tronçon distal 102 par rapport au tronçon proximal 100 autour d'un axe de rotation B-B' visible sur la figure 4. Cet axe de rotation B-B' correspond à l'axe local défini par l'extrémité proximale du tronçon 100 au niveau du raccord 104.

Dans cet exemple le raccord 104 est porté par le corps 53 de la poignée 42. Avantageusement, le raccord 104 est engagé partiellement dans un logement de l'organe de guidage 53. II est maintenu en position par une vis 105 au niveau de sa partie devant rester fixe, seule la partie mobile du raccord tournant 104 étant ainsi entraînée en rotation lors de la mise en rotation du tronçon 102.

Le tronçon distal 102 est déplaçable en rotation par rapport au tronçon proximal 100 et par rapport au réservoir 90 qui sont fixés sur l'ensemble de support 30.

Dans l'exemple représenté sur les figures 1 à 4, le réservoir 90 est fixé sur la platine 40. Le raccord tournant 104 est maintenu par la poignée 42, avantageusement au niveau de l'étrier 62. La flexibilité du tronçon proximal 100 permet d'orienter la poignée 42 par rapport à la platine 40.

Le tronçon proximal 100 raccorde ainsi la poignée 42 à la platine 40.

Le tronçon distal 102 est engagé à travers le passage de réception 62B et à travers la lumière interne 54. II traverse ainsi le corps 50.

Le tronçon distal 102 est également engagé à travers le raccord proximal 66 et est disposé dans l'espace intermédiaire 74 ajouré défini par le châssis 68.

II présente une extrémité distale engagée à travers la lumière interne 76 du raccord distal 70. L'extrémité distale du tronçon distal 102 est fixée sur la tête de distribution 33.

La partie du tronçon distal translucide 102 s'étendant dans l'espace intermédiaire 74 est visible depuis l'extérieur par un utilisateur, ce qui autorise une visualisation de l'avancée du produit fluide 14 dans le conduit de distribution 92.

En outre, le tronçon distal 102 est disposé sensiblement totalement à l'écart du châssis 68. II est notamment espacé latéralement des tiges 72A, 72B pour limiter le frottement du tronçon distal 102 du conduit 92 sur une partie fixe, lors de la rotation du tronçon distal 102.

L'absence de frottement entre le châssis 68 et le tronçon 102 limite l'usure du conduit 92. En outre, ceci évite d'échauffer le conduit 92 lors de sa rotation, ce qui peut dans certains cas détériorer ou durcir le produit fluide 14 présent dans le passage 106, avant son application sur l'objet saillant 12.

Comme illustré par les figures 2 et 5, la tête 33 comporte un guide support 120 et une cloche 122 d'application de produit, montée sur le guide support 120.

Dans cet exemple, la tête 33 est montée rotative conjointement avec le tronçon distal 102 du conduit 92 sur le raccord aval 76 du nez de guidage 44, autour d'un axe de rotation C-C' qui peut -être coaxial ou incliné par rapport à l'axe A-A' de la poignée.

Comme illustré par la figure 5, le guide support 120 comporte une paroi périphérique 124 sensiblement cylindrique d'axe C-C' et une paroi annulaire 126, transversale à l'axe C-C' disposée dans la paroi périphérique 124.

Le guide support 120 présente ainsi une section axiale sensiblement en forme de H. II délimite un logement proximal 128 d'insertion du raccord distal du nez 44 et un logement distal 130 d'insertion de la cloche.

Le tube 102 et la cloche 122 sont collés au guide support 120 et ainsi maintenus solidairement ensemble.

La paroi annulaire 126 sépare les logements 128 et 130. Elle définit une ouverture centrale 132 raccordant les logements 128 et 130 et recevant l'extrémité distale du conduit de distribution 92.

Le guide support 120 est avantageusement formé d'un matériau sensiblement rigide, tel qu'un thermoplastique comme du PVC.

La cloche 122 comporte une chemise conique déformable 134, sensiblement de révolution autour de l'axe C-C'. La chemise 134 délimite intérieurement une cavité cylindrique 136 de réception de l'objet saillant 12, dans laquelle débouche le conduit de distribution 92.

Cette cloche 122 est réalisée dans un matériau déformable, suffisamment souple et élastique tout en présentant une bonne tenue mécanique et une bonne résistance chimique aux produits 14 venant à son contact. La cloche 122 peut par exemple être réalisée en mousse EPDM.

La chemise 134 présente de préférence un contour extérieur continu pour toute section transversale perpendiculaire à l'axe C-C' entre son bord distal 138 et son bord proximal 140.

La chemise présente une forme conique avec une portion distale d'épaisseur inférieure à l'épaisseur d'une portion proximale. Par exemple, la chemise 134 présente une épaisseur d'environ 5 mm à l'extrémité proximale et d'environ 3 mm à l'extrémité distale. La portion proximale de la chemise 134 présente ainsi une tenue mécanique suffisante pour que la cloche 122 soit entraînée en rotation sans vriller lors de l'introduction dans la cloche 122 de la pièce 12 à traiter. La portion distale présente une épaisseur suffisamment faible pour faciliter sa déformation mécanique autour de la pièce 12 à traiter.

Le bord proximal 140 de la chemise 134 est inséré dans le logement distal 130.

La chemise 134 est réalisée en un matériau plus souple que le matériau formant le guide support 120.

La cloche 122 est ainsi déformable entre une configuration de repos, d'étendue radiale minimale, représentée sur la figure 5, et une configuration déformée radialement, représentée sur la figure 6.

Dans cette dernière configuration, le bord distal 138 de la chemise 134 s'est écarté radialement à l'écart de l'axe C-C' par rapport à la configuration de repos. II s'est rapproché axialement du bord proximal 140.

La cavité 136 débouche en amont dans le passage 106 de distribution de produit défini par le conduit 92. Elle est obturée partiellement par la paroi transversale 126 du guide 120.

La cavité 136 débouche en aval par une ouverture 142 d'insertion de l'objet saillant 12 dans la cavité 136, de section transversale supérieure à la section transversale du passage 106 au niveau de son extrémité distale.

La cloche 122 présente avantageusement, au voisinage du bord distal 138 dans la cavité 136, un chanfrein 144 convergeant vers l'axe C-C' en se déplaçant vers le bord proximal 140. Le chanfrein 144 est destiné à faciliter l'insertion de l'objet saillant 12 dans la cavité 136 et l'évasement de la chemise 134 vers sa configuration déformée radialement.

En référence à la figure 1, l'ensemble 34 de commande du débit d'injection comporte un piston 150 inséré dans le fût 96 pour pousser le produit 14, un mécanisme 152 de commande du déplacement du piston et un bouton d'amorçage 153 permettant d'actionner le mécanisme de commande 152.

Dans l'exemple représenté sur les figures, le mécanisme 152 est formé par un mécanisme hydraulique permettant d'injecter un gaz sur une face amont du piston 150 situé à l'opposé de la face aval du piston 150 au contact du produit.

Le mécanisme de commande 152 comprend en outre un organe de commande déporté 154 de déplacement du piston 150, avantageusement porté par la poignée 42.

L'actionnement de l'organe 154 par l'utilisateur engendre un déplacement du piston 150 dans le fût 96 vers l'aval pour pousser le produit 14 dans le passage interne 106 du conduit de distribution 92 vers la tête 33.

Selon l'invention, l'actionnement de l'organe 154 entraîne également la mise en rotation d'au moins une partie de l'ensemble de distribution 32 par l'ensemble actif 36 d'entraînement en rotation.

Dans cet exemple, le tronçon distal 102 du conduit de distribution 92 et la tête 33 sont entraînés en rotation conjointement par l'ensemble d'entraînement 36.

A cet effet, l'ensemble d'entraînement 36 comporte un moteur d'entraînement 160 et un mécanisme 162 de transmission entre le moteur 160 et le conduit 92 et/ou la tête 33.

Le moteur 160 est un moteur hydraulique ou électrique. Dans cet exemple, le moteur 160 est porté par la poignée 42. II est ainsi monté fixe dans les organes de fixation 52A, 52B. II présente une forme allongée d'axe parallèle à l'axe A-A'.

Le moteur 160 comporte un arbre de sortie 164. L'arbre de sortie 164 est rotatif autour d'un axe D-D' qui, dans cet exemple, est sensiblement parallèle à l'axe longitudinal A-A' de la poignée 42.

Le moteur 160 est raccordé électriquement et/ou hydrauliquement à une unité de commande 166 (visible sur la figure 1) par des lignes de commande 168 engagées à travers l'organe de fixation 53.

L'unité de commande 166 est avantageusement portée par la platine 40.

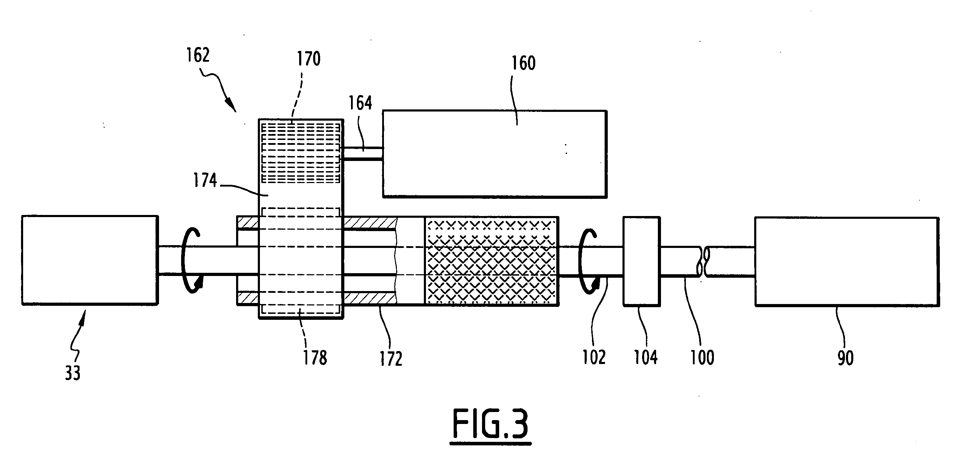

En référence aux figures 2 et 3, le mécanisme de transmission 162 comporte une roue dentée 170 solidaire de l'arbre de sortie 164, une chemise 172 d'entraînement en rotation du conduit 92, montée rotative le long de l'axe A-A' dans le corps 50 de la poignée 42, et une courroie de transmission 174 raccordant la chemise 172 à la roue dentée 170.

La chemise 172 est engagée autour du tronçon distal 102 dans le corps 50. Elle est rendue solidaire en rotation du tronçon 102 par l'intermédiaire d'une pince 176, avantageusement à écrou conique. Elle présente, en regard de la courroie 174, une denture externe 178.

La courroie 174 est engagée autour de la roue dentée 170 et autour de la denture 178. Elle est apte à transmettre le mouvement de rotation de l'arbre de sortie 164 du moteur 160 à la chemise 172 et au tronçon aval 102 par l'intermédiaire de la pince 176. Ainsi, l'entraînement en rotation de l'arbre de sortie 164 du moteur 160 provoque la rotation du tronçon distal 102.

Le fonctionnement du premier dispositif 10 selon l'invention, en vue de l'enduction d'un objet saillant 12 par un produit fluide 14 va maintenant être décrit.

Initialement, l'ensemble de distribution 32 est monté dans l'ensemble de support 30.

A cet effet, le réservoir 90, préalablement rempli de produit fluide 14 et obturé par le piston 150, est monté sur la platine 40 et est raccordé au mécanisme de commande 152 présent sur la platine 40. Le tronçon proximal 100 et le tronçon distal 102 sont initialement séparés, le raccord tournant 104 étant démonté. La tête 33 est elle solidaire du tronçon 102.

Le tronçon distal 102 est engagé successivement dans le raccord distal 70, à travers l'espace intermédiaire 74 défini par le châssis 68, puis à travers le mécanisme de transmission 162 disposé dans le corps creux 50.

Le raccord tournant 104 est alors introduit dans l'organe de guidage 53 et l'extrémité proximale du tronçon distal 102 est engagée dans la partie mobile de ce raccord.

Le raccord 104 est maintenu en position dans l'organe 53 par serrage de la vis de maintien 105.

Au cours de la mise en place du tronçon 102, la tête 33, solidaire du tronçon 102, vient se placer à l'extrémité distale du nez de guidage 44 en insérant partiellement le tronçon de guidage 78 du raccord distal 70 dans le logement proximal 128 du guide support 120 de cette tête.

La pince 176 est serrée pour rendre solidaire le tronçon distal 102 en rotation avec la chemise 172.

Puis, le tronçon proximal 100 est déployé jusqu'au raccord tournant 104 et engagé dans ce raccord, le tronçon proximal 100 étant alors raccordé au tronçon distal 102 par l'intermédiaire du raccord tournant 104 pour établir le passage continu 106.

Ceci étant fait, l'opérateur monte la platine 40 en la fixant par exemple sur son dos ou/et sur ses épaules (alternativement il peut la laisser posée à côté de lui) et saisit la poignée 42 avec sa main.

Puis, l'opérateur déplace la tête 33 vers l'objet saillant 12 à enduire.

Ceci étant fait, l'opérateur réalise la phase d'amorçage consistant à remplir de produit 14 l'ensemble du conduit 92. Pour cela il appuie sur le bouton d'amorçage 153 afin d'actionner le mécanisme de commande 152. Le mécanisme 152 déplace alors le piston 150 vers l'ouverture distale du réservoir 90 et pousse ainsi du produit 14 dans le passage 106 du conduit de distribution 92. Cette phase d'amorçage est réalisée en générant une pression à l'intérieur du réservoir 90 supérieure à la pression générée dans ce réservoir lorsque l'opérateur actionne l'organe de commande 154 de façon à réduire le temps nécessaire au remplissage complet du conduit 92.

L'opérateur surveille l'arrivée de produit 14 dans le tronçon proximal 100, puis dans le tronçon distal 102. Compte tenu de la structure ajourée du châssis 68, il observe facilement l'arrivée de produit fluide 14 dans la tête 33. Le produit 14 imprègne alors la cavité 136.

L'opérateur relâche alors le bouton d'amorçage 153 et active ensuite l'organe de commande 154. II pilote ainsi l'unité de commande 166, qui d'une part démarre le moteur d'entraînement 160 et d'autre part actionne le mécanisme de commande 152 afin de déplacer le piston 150 pour générer dans le réservoir 90 une pression inférieure à la pression d'amorçage, mais qui permet de faire avancer le fluide 14.

Le moteur d'entraînement 160 entraîne en rotation l'arbre 164 autour de l'axe D-D'. Le mouvement de rotation de l'arbre de sortie 164 est transmis à la chemise 172 par l'intermédiaire de la roue dentée 170 de la courroie 174 et par l'intermédiaire de la denture externe 178.

La chemise 172 est alors entraînée en rotation autour de l'axe A-A' dans la poignée 42.

La pince 176 étant activée, le tronçon distal 102 est entraîné conjointement en rotation autour de l'axe A-A' dans la poignée 42.

La rotation du tronçon distal 102 se transmet sur toute sa longueur jusqu'à son extrémité distale.

L'extrémité distale du tronçon distal 102 étant solidaire en rotation de la tête 33, la tête 33 est également entraînée en rotation autour de l'axe C-C'.

L'entraînement en rotation de la tête 33 autour de l'axe C-C' est guidé par la coopération entre le raccord distal 70 du nez 44 et le guide support 120.

La cloche 122, entraînée en rotation autour de l'axe C-C' occupe initialement sa configuration de repos.

L'opérateur amène alors le bord distal 138 de la cloche 122 au contact de l'objet saillant 12 et insère partiellement l'objet saillant 12 dans la cavité 136 remplie au moins partiellement de produit fluide 14.

La présence du chanfrein 144 facilite l'insertion de l'objet saillant 12.

L'opérateur déplace la tête 33 vers la pièce 20 jusqu'à ce que le bord distal 138 entre en contact avec la pièce 20. La cloche 122 s'évase vers sa configuration déployée radialement et de sorte que le produit 14 présent dans la cavité 136 s'applique sur l'ensemble des surfaces de l'objet saillant 12 ainsi que sur la zone périphérique 180 adjacente à cet objet sur la surface 25. Le produit 14 recouvre ainsi totalement l'objet saillant 12 et sa périphérie de façon à assurer la protection recherchée.

La rotation de la cloche 122 permet une application contrôlée et continue de produit 14 sur la surface extérieure de l'objet saillant 12.

De plus la pression générée à l'intérieur du réservoir 90 est déterminée de façon à engendrer un flux d'écoulement de produit 14 dans le conduit 92 régulier et en quantité nécessaire et suffisante pour recouvrir la pièce à traiter. A cet effet, la platine 40 comporte un régulateur de pression et un manomètre non représentés sur les figures permettant de régler le débit de produit 14 en fonction de sa viscosité et de la géométrie des fixations à traiter.

Une fois l'application terminée, l'opérateur extrait l'objet saillant 12 hors de la cavité 136 en déplaçant la cloche 122 à l'écart de l'objet saillant 12.

La cloche 122 reprend sa configuration rétractée de repos. Dans le cas où un fil de produit 14 se forme entre l'objet saillant 12 et la tête 33, ce fil est rompu sous l'effet de la rotation de la tête 33, ce qui évite de déplacer le fil vers un autre objet saillant 12. L'opérateur relâche alors l'organe de commande 154 afin d'arrêter la rotation de la cloche 122 et l'écoulement du produit 14.

Le produit fluide 14 déposé sur l'objet saillant 12 peut alors durcir, par exemple par polymérisation et/ou réticulation pour réaliser le revêtement souhaité sur l'objet saillant 12.

L'opérateur déplace alors la tête 33 vers un autre objet saillant 12 et répète les opérations précédentes pour enduire cet objet 12.

Il est ainsi possible d'obtenir un revêtement homogène, lisse, avec une épaisseur de produit régulière, sans arête vive et sans zone découverte grâce au dispositif d'enduction 10 selon l'invention.

Cette qualité de recouvrement est répétable d'opération en opération. Elle peut être obtenue dans des zones d'accessibilité réduite, et même lorsque la visibilité est très faible.

Le dispositif 10 permet également de contrôler la quantité de produit appliqué, en évitant les surépaisseurs et les bavures et en se limitant strictement aux zones à recouvrir.

Lorsque l'ensemble de support 30 comporte une platine 40 et une poignée 42, il est particulièrement adapté à la manipulation, en particulier à une main, ce qui simplifie les mouvements à effectuer par l'opérateur et diminue les risques de troubles musculo-squelettiques.

La productivité du procédé est généralement augmentée par l'utilisation du dispositif 10. En outre, seule la quantité de produit nécessaire à l'enduction de l'objet saillant 12 est exposée à l'air ambiant lors de l'utilisation du dispositif, le reste du produit 14 restant confiné dans l'ensemble de distribution 32. Par suite, la qualité du produit 14 appliqué ne se dégrade pas et le dispositif d'enduction 10 réduit les gaspillages en termes de quantité de produit et en termes de temps de réapprovisionnement.

Dans une variante, l'ensemble du conduit de distribution 92 est entraîné en rotation, sur toute la longueur du conduit 92. Le raccord tournant 104 est alors prévu à l'extrémité distale du réservoir 90.

Dans encore une autre variante, seule la tête 33 est entraînée en rotation, le conduit de distribution 92 restant fixe en rotation par rapport à l'ensemble de support 30. Dans ce cas, un raccord tournant 104 est prévu entre la tête et l'extrémité distale du conduit de distribution 92.

Dans encore une autre variante, le moteur 160 n'est pas embarqué sur la poignée 42, mais est reçu sur la platine 40. La rotation de l'arbre de sortie du moteur 160 est alors transmise à la tête 33 par un lien, par exemple un câble flexible.

Dans une autre variante, l'ensemble d'entraînement en rotation 36 comprend des moyens permettant d'inverser périodiquement le sens de rotation de la tête 33 ou simplement de l'inverser sur commande.

Dans encore une autre variante, le dispositif 10 comporte des moyens de dosage du volume de produit 14 injecté dans la tête 33 par l'intermédiaire du conduit de distribution 92. Ces moyens de dosage sont par exemple embarqués dans la poignée 42 ou sont disposés sur la platine 40.

Alternativement, un autre moyen qu'un piston 150 peut être utilisé pour pousser le produit contenu dans le réservoir 90 vers le conduit de distribution 92. Ce moyen peut-être par exemple une seringue, un doseur, un pistolet de dosage, une pompe.

Dans une variante, la platine 40 est remplacée par un poste fixe et n'est donc pas portée par l'opérateur. Ce poste fixe peut être raccordé à une pluralité de poignées mobiles 42 telles que décrites précédemment.

Dans ce cas, le dispositif peut comprendre un réservoir 90 commun à une partie ou à l'ensemble des différents conduits de distribution 92 associés à chaque tête d'injection 33.

Dans une variante illustrée par la figure 8, le dispositif 10 peut être utilisé pour enduire un objet saillant 12 ne comprenant pas d'écrou, tel qu'un goujon.

La longueur de la cloche 122, prise le long de l'axe C-C' peut être adaptée en fonction du type d'objet saillant 12 à recouvrir.

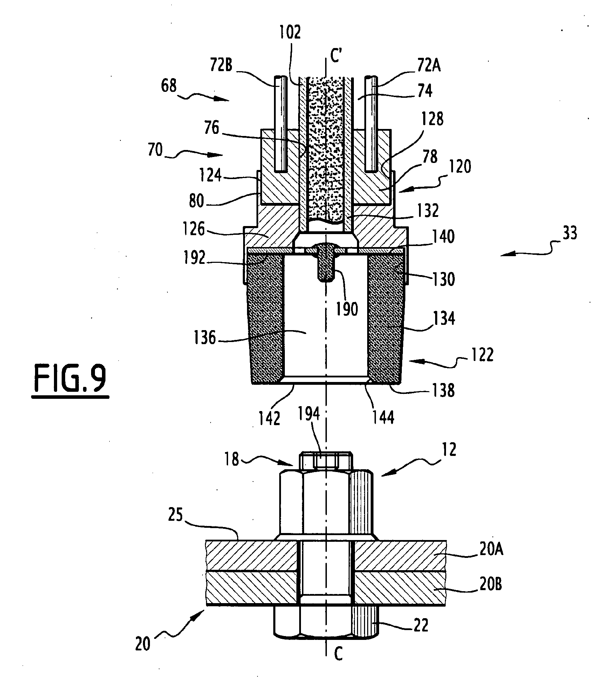

Dans une autre variante, représentée sur la figure 9, la cloche 122 comporte un applicateur central 190 disposé dans la cavité d'insertion 136. L'applicateur central 190 s'étend axialement dans la cavité 136. Il présente une longueur inférieure à celle de la cavité 136. Il est par exemple porté par une plaque de support percée 192 s'étendant transversalement dans la cavité 136.

L'applicateur central 190 s'étend à l'écart transversalement de la chemise 134, centré sur l'axe C-C'.

L'applicateur central 190 est destiné à appliquer du produit dans un objet saillant 12 présentant une empreinte 194 creuse.

Dans encore une autre variante, le nez 44 est équipé de moyens d'éclairage, comme par exemple une lampe destinée à éclairer la zone de travail dans laquelle est présent l'objet saillant 12.

En variante, une caméra peut être prévue sur le nez 44 pour visualiser la zone de travail ou encore pour enregistrer de déroulement de l'opération d'enduction, par exemple à des fins de traçabilité.

Dans encore une autre variante, le dispositif 10 n'est pas piloté par un opérateur, mais par un robot. II est alors embarqué sur une machine automatique.

Dans une autre variante, l'ensemble de support 30 comporte un corps unique, déplaçable d'un seul tenant, de sorte que le dispositif 10 forme un pistolet.

## Revendications

1. Dispositif (10) d'enduction d'un objet saillant (12) par un produit fluide (14), comporant :
- un ensemble (30) de support ;
- un ensemble (32) de distribution monté sur l'ensemble de support (30), l'ensemble de distribution (32) comportant un réservoir (90) de produit fluide, une tête (33) d'application du produit fluide définissant une cavité d'insertion (136) de l'objet saillant (12), et un conduit (92) de distribution de produit fluide raccordant le réservoir (90) à la cavité d'insertion (136), la tête comportant une cloche (122) présentant une chemise déformable (134). caractèrisé en ce que la tête d'application (33) montée rotative par rapport à l'ensemble de support (30), et en ce que le dispositif comprenant en outre
- un ensemble actif (36) d'entraînement en rotation de la tête d'application (33) porté par l'ensemble de support (30),

2. Dispositif (10) selon a revendication 1, **caractérisé en ce que** la tête d'application (33) est montée rotative par rapport à l'ensemble de support (30) autour d'un axe (C-C') passant par la cavité (136).

3. Dispositif (10) selon l'une quelconque des revendications 1 ou 2, **caractérisé en ce que** la tête d'application (33) et au moins un tronçon (102) du conduit de distribution (92) sont montés rotatifs conjointement l'un avec l'autre par rapport à l'ensemble de support (30).

4. Dispositif (10) selon l'une quelconque des revendications précédentes, **caractérisé en ce que** l'ensemble de support (30) comporte une base (42) et un nez de guidage (44) en saillie par rapport à la base (42), la tête d'application (33) étant montée à l'extrémité du nez de guidage (44).

5. Dispositif (10) selon la revendication 4, **caractérisé en ce que** le nez de guidage (44) comporte un châssis ajouré (68) situé au moins partiellement à l'écart du conduit de distribution (92), le châssis ajouré (68) comprenant avantageusement une tige (72A, 72B), en particulier deux tiges (72A, 72B) situées de part et d'autre du conduit de distribution (92).

6. Dispositif (10) selon l'une des revendications 4 ou 5, **caractérisé en ce que** le nez de guidage (44) est mobile angulairement par rapport à la base (42), le dispositif comportant des moyens de réglage (66 ; 71) de l'orientation angulaire du nez de guidage (44) par rapport à la base (42).

7. Dispositif (10) selon une quelconque des revendications précédentes, **caractérisé en ce qu'**il comporte un ensemble (34) d'injection de produit fluide à partir du réservoir (90) vers le conduit de distribution (92).

8. Dispositif (10) selon la revendication 7, **caractérisé en ce que** l'ensemble d'injection (34) comporte un mécanisme de commande (152) du débit de produit fluide injecté dans le conduit de distribution (92) et avantageusement au moins un organe d'actionnement (154) du mécanisme de commande (152).

9. Dispositif (10) selon une quelconque des revendications précédentes, **caractérisé en ce que** le conduit de distribution (92) comporte un tronçon (100) fixe par rapport à l'ensemble de support (30) et un tronçon (102) mobile en rotation par rapport au tronçon fixe (100), le tronçon mobile (102) étant raccordé à l'ensemble d'entraînement en rotation (36), le conduit de distribution (92) comportant un raccord tournant (104) interposé entre le tronçon mobile (102) et le tronçon fixe (100).

10. Dispositif (10) selon une quelconque des revendications précédentes, **caractérisé en ce que** l'ensemble de support (30) comporte une platine (40) et une poignée de commande (42) destinée à être saisie par un opérateur ou un robot, la poignée de commande (42) étant manoeuvrable par rapport à la platine (40) pour orienter la tête de distribution (33) vers l'objet saillant indépendamment de la platine (40).

11. Dispositif (10) selon la revendication 10, **caractérisé en ce que** l'ensemble d'entraînement en rotation (36) comporte un moteur (160) monté sur la poignée de commande (42).

12. Dispositif (10) selon les revendications 10 ou 11, prise en combinaison avec la revendication 8, **caractérisé en ce que** le réservoir (90) est monté sur la platine (40), l'organe d'actionnement (154) du mécanisme de commande (152) étant avantageusement disposé sur la poignée (42).

13. Dispositif (10) selon une des revendications précédentes, **caractérisé en ce que** la cloche est déformable entre une configuration rétractée d'étendue radiale minimale et une configuration déformée radialement, la configuration rétractée constituant une configuration de repos:

14. Dispositif (10) selon la revendication 13, **caractérisé en ce que** la chemise déformable (134) est de forme conique.

15. Dispositif (10) selon les revendications 13 ou 14, **caractérisé en ce que** le bord libre de la chemise (134) présente un chanfrein intérieur (144).

16. Dispositif (10) selon l'une quelconque des revendications précédentes, **caractérisé en ce que** la tête d'application comporte un applicateur (190) reçu en saillie dans la cavité d'insertion (136).

17. Ensemble (32) de distribution amovible pour un dispositif (10) selon l'une quelconque des revendications précédentes, comportant
- un conduit (92) de distribution de produit fluide destiné à être monté sur un ensemble de support (30) du dispositif d'enduction (10);
- une tête (33) d'application du produit, délimitant une cavité (136) d'insertion de l'objet saillant (12), le conduit de distribution (92) débouchant dans la cavité d'insertion (136), la tête (33) comportant une cloche (122) présentant une chemise déformable (134)
- un réservoir (90) destiné à contenir du produit fluide, raccordé au conduit de distribution (92) de produit fluide;
**caractérisé en ce qu'**il comporte en outre
- au moins un raccord tournant (104) interposé entre le réservoir (90) et le conduit de distribution (92), ou entre un tronçon fixe (100) et un tronçon rotatif (102) du conduit de distribution (92), ou entre le conduit de distribution (92) et la tête d'application (33).

18. Procédé d'enduction d'un objet saillant (12), du type comprenant les étapes suivantes :
- fourniture d'un dispositif (10) selon l'une quelconque des revendications 1 à 16 ;
- introduction de l'objet saillant (12) dans la cavité d'insertion (136) délimitée par la tête d'application (33) ;
- amenée de produit fluide dans la tête d'application (33) à travers le conduit de distribution (92);
- entraînement en rotation de la tête d'application (33) par rapport à l'ensemble de support (30), l'objet saillant (12) étant reçu dans la cavité d'insertion (136);
- application de produit fluide sur l'objet saillant (12) ;
- retrait de la tête d'application (33) pour extraire l'objet saillant (12) hors de la cavité d'insertion (136).

## Patentansprüche

1. Vorrichtung (10) zur Beschichtung eines vorstehenden Objekts (12) mit einem Fluidprodukt (14), aufweisend:
- eine Halteeinrichtung (30),
- eine Zuführeinrichtung (32), die an der Halteeinrichtung (30) angebracht ist, wobei die Zuführeinrichtung (32) aufweist einen Behälter (90) für das Fluidprodukt, einen Kopf (33) zur Aufbringung des Fluidprodukts, der eine Kavität (136) zum Einsetzen des vorstehenden Objekts definiert, und eine Leitung (92) zum Zuführen des Fluidprodukts, welche den Behälter (90) mit der Einsetz-Kavität (136) verbindet, wobei der Kopf (33) eine Glocke (122) aufweist, die eine deformierbare Muffe (134) bereitstellt, **dadurch gekennzeichnet, dass** der Aufbringung-Kopf (33) bezüglich der Halteeinrichtung (30) drehbar montiert ist, und dass die Vorrichtung ferner aufweist eine Antriebseinrichtung (36) zum Drehantreiben des Aufbringung-Kopfs (33), die von der Haltevorrichtung (30) gehalten ist.

2. Vorrichtung (10) gemäß Anspruch 1, **dadurch gekennzeichnet, dass** der Aufbringung-Kopf (33) bezüglich der Halteeinrichtung (30) um eine Achse (C-C') drehbar ist, die durch die Kavität (136) verläuft.

3. Vorrichtung (10) gemäß einem der Ansprüche 1 oder 2, **dadurch gekennzeichnet, dass** der Aufbringung-Kopf (33) und wenigstens ein Abschnitt (102) der Zuführleitung (92) bezüglich der Halteeinrichtung (30) miteinander gemeinsam drehbar montiert sind.

4. Vorrichtung (10) gemäß einem der vorhergehenden Ansprüche, **dadurch gekennzeichnet, dass** die Halteeinrichtung (30) eine Basis (42) und eine Führungsnase (44) aufweist, die bezüglich der Basis (42) vorsteht, wobei der Aufbringung-Kopf (33) am Ende der Führungsnase (44) angebracht ist.

5. Vorrichtung (10) gemäß Anspruch 4, **dadurch gekennzeichnet, dass** die Führungsnase (44) einen durchbrochenen Rahmen (68) aufweist, der wenigstens teilweise im Abstand von der Zuführleitung (92) angeordnet ist, wobei der durchbrochene Rahmen (68) vorteilhaft einen Stab (72A, 72B), insbesondere zwei Stäbe (72A, 72B) aufweist, die beidseitig der Zuführleitung (92) angeordnet sind.

6. Vorrichtung (10) gemäß einem der Ansprüche 4 oder 5, **dadurch gekennzeichnet, dass** die Führungsnase (44) bezüglich der Basis (42) winkelbewegbar ist, wobei die Vorrichtung Einstellmittel (66; 71) zur Winkelausrichtung der Führungsnase (44) bezüglich der Basis (42) hat.

7. Vorrichtung (10) gemäß einem der vorhergehenden Ansprüche, **dadurch gekennzeichnet, dass** sie eine Einrichtung (34) zur Injektion des Fluidprodukts von dem Behälter (90) aus zu der Zuführleitung (92) hin aufweist.

8. Vorrichtung (10) gemäß Anspruch 7, **dadurch gekennzeichnet, dass** die Injektionseinrichtung (34) aufweist einen Mechanismus (152) zur Steuerung des Ausflusses des Fluidprodukts, das in die Zuführleitung (92) injiziert wird, und vorteilhaft wenigstens ein Betätigungselement (154) des Steuerungsmechanismus (152).

9. Vorrichtung (10) gemäß irgendeinem der vorhergehenden Ansprüche, **dadurch gekennzeichnet, dass** die Zuführleitung (92) aufweist einen Abschnitt (100), der bezüglich der Halteeinrichtung (30) feststehend ist, und einen Abschnitt (102), der bezüglich des feststehenden Abschnitts (100) drehbewegbar ist, wobei der bewegbare Abschnitt (102) mit der Drehantriebseinrichtung (36) verbunden ist, wobei die Zuführleitung (92) eine Drehverbindung (104) aufweist, die zwischen dem bewegbaren Abschnitt (102) und dem feststehenden Abschnitt (100) angeordnet ist.

10. Vorrichtung (10) gemäß einem der vorhergehenden Ansprüche, **dadurch gekennzeichnet, dass** die Halteeinrichtung (30) eine Platte (40) und einen Steuergriff (42) aufweist, welcher dazu bestimmt ist, um von einem Bediener oder einem Roboter ergriffen zu werden, wobei der Steuergriff (42) bezüglich der Platte (40) bewegbar ist zum Orientieren des Aufbringung-Kopfs (30) gegen das vorstehenden Objekt unabhängig von der Platte (40).

11. Vorrichtung gemäß Anspruch 10, **dadurch gekennzeichnet, dass** die Drehantriebseinrichtung (36) einen Motor (160) aufweist, der an dem Steuergriff (42) angebracht ist.

12. Vorrichtung gemäß den Ansprüchen 10 oder 11, in Kombination mit Anspruch 8, **dadurch gekennzeichnet, dass** der Behälter (90) auf der Platte (40) angebracht ist, wobei das Betätigungselement (154) des Steuermechanismus (152) vorteilhaft an dem Griff (42) angeordnet ist.

13. Vorrichtung (10) gemäß einem der vorhergehenden Ansprüche, **dadurch gekennzeichnet**, das die Glocke deformierbar ist zwischen einer eingezogenen Konfiguration mit minimaler radialer Erstreckung und einer radial deformierten Konfiguration, wobei die eingezogene Konfiguration eine Ruhekonfiguration ist.

14. Vorrichtung (10) gemäß Anspruch 13, **dadurch gekennzeichnet, dass** die deformierbare Muffe (134) von konischer Form ist.

15. Vorrichtung (10) gemäß den Ansprüchen 13 oder 14, **dadurch gekennzeichnet, dass** der freie Rand der Muffe (134) eine innere Fase (144) hat.

16. Vorrichtung (10) gemäß einem der vorhergehenden Ansprüche, **dadurch gekennzeichnet, dass** der Aufbringung-Kopf ein Aufbringteil (190) aufweist, das in der Einsetzkavität (136) vorstehend aufgenommen ist.

17. Lösbare Zuführeinrichtung (32) für eine Vorrichtung (10) gemäß einem der vorhergehenden Ansprüche, aufweisend
- eine Leitung (92) zum Zuführen eines Fluidprodukts, welche dazu bestimmt ist, um an einer Halteeinrichtung (30) der Beschichtungsvorrichtung (10) angebracht zu werden,
- einen Kopf (33) zur Aufbringung des Fluidprodukts, der eine Kavität (136) zum Einsetzen des vorstehenden Objekts begrenzt, wobei die Zuführleitung (92) in die Einsetzkavität (136) ausmündet, wobei der Kopf (33) eine Glocke (122) aufweist, die eine deformierbare Muffe (134) bereitstellt, **dadurch gekennzeichnet, dass** sie ferner aufweist
- wenigstens eine Drehverbindung (104), die zwischen dem Behälter (90) und der Zuführleitung (92) oder zwischen einem feststehenden Abschnitt (100) und einem drehbaren Abschnitt (102) der Zuführleitung (92) oder zwischen der Zuführleitung (92) und dem Aufbringung-Kopf (33) angeordnet ist.

18. Verfahren zum Beschichten eines vorstehenden Objekts (12), des Typs, welcher die nachfolgenden Schritte aufweist:
- Bereitstellen einer Vorrichtung (10) gemäß einem der Ansprüche 1-16,
- Einführen des vorstehenden Objekts (12) in die Einsetzkavität (136), die von dem Aufbringung-Kopf (33) begrenzt ist,
- Einbringen von Fluidprodukt in den Aufbringung-Kopf (33) über die Zuführleitung (92),
- Drehantreiben des Aufbringung-Kopfs (33) bezüglich der Halteeinrichtung (30), wobei das vorstehende Objekt (12) in der Einsetzkavität (136) aufgenommen ist,
- Aufbringen des Fluidprodukts auf das vorstehende Objekt (12),
- Zurückziehen des Aufbringung-Kopfs (33), um das vorstehende Objekt (12) aus der Einsetzkavität (136) heraus zu bringen.

## Claims

1. Device (10) for coating a projecting object (12) with a fluid product (14), including:
- a support unit (30);
- a distribution unit (32) mounted on the support unit (30), the distribution unit (32) including a reservoir (90) of fluid product, a head (33) for applying the fluid product defining an insertion cavity (136) of the projecting object (12), and a pipe (92) for distributing fluid product connecting the reservoir (90) to the insertion cavity (136), the head (33) including a cover (122) having a deformable casing (134), **characterised in that** the application head (33) is mounted to rotate in relation to the support unit (30) and **in that** the device furthermore comprises
- an active unit (36) for rotating driving of the application head (33) fitted on the support unit (30).

2. Device (10) according to claim 1, **characterised in that** the application head (33) is mounted to rotate in relation to the support unit (30) on an axis (C-C') passing through the cavity (136).

3. Device (10) according to any one of claims 1 or 2, **characterised in that** the application head (33) and at least one section (102) of the distribution pipe (92) are mounted to rotate in conjunction with one another in relation to the support unit (30).

4. Device (10) according to any one of the preceding claims, **characterised in that** the support unit (30) includes a base (42) and a guide nose (44) projecting in relation to the base (42), the application head (33) being mounted at the end of the guide nose (44).

5. Device (10) according to claim 4, **characterised in that** the guide nose (44) includes an openwork frame (68) situated at least partially away from the distribution pipe (92), the openwork frame (68) advantageously comprising a rod (72A, 72B), in particular two rods (72A, 72B) situated on either side of the distribution pipe (92).

6. Device (10) according to any one of claims 4 or 5, **characterised in that** the guide nose (44) is movable at an angle in relation to the base (42), the device including control means (66; 71) for angular orientation of the guide nose (44) in relation to the base (42).

7. Device (10) according to any one of the preceding claims, **characterised in that** it includes a unit (34) for injecting fluid product from the reservoir (90) towards the distribution pipe (92).

8. Device (10) according to claim 7, **characterised in that** the injection unit (34) includes a mechanism (152) for controlling the flow rate of fluid product injected into the distribution pipe (92) and advantageously at least one actuation component (154) of the control mechanism (152).

9. Device (10) according to any one of the preceding claims, **characterised in that** the distribution pipe (92) includes a section (100) fixed in relation to the support unit (30) and a rotating section (102) movable in relation to the fixed section (100), the movable section (102) being connected to the rotating drive unit (36), the distribution pipe (92) including a turning connection (104) interposed between the movable section (102) and the fixed section (100).

10. Device (10) according to any of the preceding claims, **characterised in that** the support unit (30) includes a plate (40) and a control handle (42) intended to be grasped by an operator or a robot, the control handle (42) being manoeuvrable in relation to the plate (40) to orient the distribution head (33) towards the object independently projecting from the plate (40).

11. Device (10) according to claim 10, **characterised in that** the rotating drive unit (36) includes a motor (160) mounted on the control handle (42).

12. Device (10) according to claims 10 or 11, taken in combination with claim 8, **characterised in that** the reservoir (90) is mounted on the plate (40), the actuation component (154) of the control mechanism (152) being advantageously disposed on the handle (42).

13. Device (10) according to any one of the preceding claims, **characterised in that** the cover is deformable between a minimum radial extent retracted configuration and a radially deformed configuration, the retracted configuration constituting a rest configuration.

14. Device (10) according to claim 13, **characterised in that** the deformable casing (134) has a conical shape.

15. Device (10) according to claims 13 or 14, **characterised in that** the free edge of the casing (134) has an internal chamfer (144).

16. Device (10) according to any one of the preceding claims, **characterised in that** the application head includes an applicator (190) received projecting into the insertion cavity (136).

17. Removable distribution unit (32) for a device (10) according to any one of the preceding claims including:
- a pipe (92) for distributing fluid product intended to be mounted on a support unit (30) of the coating device (10);
- a head (33) for applying the product, delimiting a cavity (136) for inserting the projecting object (12), the distribution pipe (92) opening into the insertion cavity (136), the head (33) including a cover (122) having a deformable casing (134);
- a reservoir (90) intended to contain the fluid product, connected to the pipe (92) for distributing fluid product;
**characterised in that** it furthermore includes
- at least a turning connection (104) interposed between the reservoir (90) and the distribution pipe (92), or between a fixed section (100) and a rotating section (102) of the distribution pipe (92), or between the distribution pipe (92) and the application head (33).

18. Method for coating a projecting object (12), of the type comprising the following steps:
- supply of a device (10) according to any one of claims 1 to 16;
- introduction of the projecting object (12) into the insertion cavity (136) delimited by the application head (33);
- delivery of fluid product into the application head (33) through the distribution pipe (92);
- rotating drive of the application head (33) in relation to the support unit (30), the projecting object (12) being received in the insertion cavity (136);
- application of fluid product on the projecting object (12);
- removal of the application head (33) to extract the projecting object (12) from the insertion cavity (136).
